# EUROPEAN PATENT APPLICATION

(11) **EP 1 655 928 A1**
(43) Date of publication of application: **10.05.2006**
(21) Application number: 04292627.9
(22) Date of filing: 05.11.2004
(51) Int. Cl.: H04L 29/12, H04L 12/28

(54) **Method and apparatus for allocating a unique identifier to a network node**

(71) Applicant: Hitachi, Ltd., Tokyo 100-8280 (JP)
(72) Inventor: Yamamoto, Lidia, 06650 Opio (FR); Hayashi, Masato, Sagamihara-shi 228-0805 Kanagawa (JP)
(74) Representative: Beetz & Partner

(57) **Abstract**

This invention relates to a method and an apparatus for allocating a unique identifier to a network node in a communication network comprising a plurality of network nodes. A network node comprises storage means (2) for storing a plurality of unique identifiers allocated to nodes in the network (20), wherein information about each allocated identifier is distributed over multiple network nodes; candidate identifier generating means (3) for generating a candidate identifier for a node which requests the allocation of a unique identifier; and communication means (4) for communicating, via the communication network (20), with other network nodes, the communication means (4) being configured to distribute the generated candidate identifier to other nodes in order to inquire the other nodes whether the candidate identifier is unique.

## Description

This invention relates to a method and an apparatus for allocating a unique identifier to a network node in a communication network comprising a plurality of network nodes.

The management and maintenance of communication networks is an increasing challenge, in particular when the network size is large or the network is heterogeneous, i.e. includes different types of devices or network nodes. One problem occurring in many communication networks is the assignment of network addresses to network nodes, also called address configuration.

The Dynamic Host Configuration Protocol (DHCP) is the most commonly used protocol for automatic assignment of IP addresses in infrastructure-based IPv4 networks. DHCP is a client-server protocol. Every time a new host (client) connects to the network, it sends a broadcast message to request a new address. One or more dedicated DHCP servers may respond thereto with an offer for an IP address. The requesting host accepts one of the offers and configures its own network interface card with the accepted address. The DHCP server manages a set of assigned addresses and marks the accepted address as leased to the host in question. The lease of the address is restricted to a given period of time and the host is responsible for renewing its lease before it expires. Otherwise, the address can be released for use by another host. A DHCP server keeps state information about the address ranges it manages and all allocated addresses with their corresponding lease periods. Since DHCP relies on state information, a problem of consistency occurs when a DHCP server fails. Furthermore, DHCP requires the explicit management of the allocated address ranges. It is thus not appropriate for self-organizing infrastructureless network structures, such as ad-hoc networks.

Ad-hoc networks are infrastructure-free, self-organizing network structures that do not rely on human system managers to build and configure the network. Usually, an ad-hoc network is made up of devices equipped with computer network interface cards. The topology of the ad-hoc network is dynamic and any node may act as a router (relay node) for other nodes in the network. One common type of ad-hoc network is a Mobile Ad-Hoc Network (MANET) according to the standard of the IETF MANET Working Group which is in charge of standardization of protocols related to ad-hoc networks within the IETF.

IPv6 provides native address auto-configuration capabilities for infrastructure-based networks. As opposed to DHCP, IPv6's native address auto-configuration is a stateless mechanism: There is no server that keeps track of all the allocated addresses. Routers in the network announce network prefixes, which hosts use to build their own IP addresses by concatenating the announced prefix with a locally available interface identifier. IPv6 auto-configuration is meant for host (end system) auto-configuration only and is not suitable for routers. Since the nodes of an ad-hoc network may act at the same time as routers and hosts, the IPv6 mechanism is not suitable for the auto-configuration of nodes in an ad-hoc network.

Since in general no system manager is available in an ad-hoc network to configure the different parameters and no centralized servers are available to provide services at well-known locations, auto-configuration is a crucial requirement for ad-hoc networks. However, complete self-configuring ad-hoc networks are still not available. A first step towards this goal is to automate the process of obtaining a valid network layer address (e.g. IP address) for each node of the ad-hoc network. In order to be valid, the address must be routable at least within the whole ad-hoc network. This requires that the address is unique within the scope of the ad-hoc network.

In "IP Address Auto-Configuration for Ad-hoc Networks", Internet Draft draft-ietf-manet-autoconf-01.txt, IETF MANET Working Group, 14 November 2001, Charles E. Perkins, Jari T. Malinen, Ryuji Wakikawa, Elizabeth M. Belding-Royer, Yuan Sun, an IP address auto-configuration for ad-hoc networks is proposed. A node that wishes to participate in the ad-hoc network first assigns itself a temporary random IP address from a predefined range. It uses this IP address for initial communication exclusively for the purpose of obtaining a permanent IP address. Then, it allocates a random IP address from another predefined range as a candidate permanent address and starts a multi-hop Duplicate Address Detection (multi-hop DAD) procedure. The new node sends an address request (AREQ) message for the candidate address using the temporary address as source address and a broadcast (IPv4) or multicast (IPv6) address as a destination address. All nodes within reachable range from the new node will receive the message and check whether they have the candidate address allocated to their network interface. If the candidate address is allocated to the node, the node responses with an address reply (AREP) message. Otherwise, the node decrements the message's TTL (time-to-live) and, if the TTL is greater than zero, re-broadcasts (or multicasts) the AREQ message. When the TTL reaches zero, the message is discarded. If the new node receives an AREP message within a time window, it selects a new random address and repeats the multi-hop DAD procedure until it does not receive any AREP after a timeout. It then assumes that the candidate address is not in use and assigns it to itself as a permanent IP address.

This method works well when the network is always fully connected, and its stateless nature makes it suitable for ad-hoc networks. However, it is not scalable to large and dynamic networks with many joining nodes, since every time a new node joins the ad-hoc network, the whole network is flooded with DAD messages. Neither is the method robust to network instabilities and partitioning: a node that is temporary unreachable (e.g. behind an obstacle) and fails to respond with an AREP message may have its IP address assigned to another node. Therefore, duplicate addresses may easily arise as a consequence of temporary network partitioning.

It is an object of the present invention to provide a method and an apparatus for allocating a unique identifier to a network node which is robust and efficient, in particular with regard to self-organizing infrastructureless networks, such as ad-hoc networks.

This object is achieved by the independent claims. The dependent claims refer to preferred embodiments of the invention.

The basic idea of the present invention is that multiple network nodes each store a plurality of identifiers or network addresses already allocated to other network nodes so that information about each allocated identifier is distributed over the multiple nodes. Thus, the information about allocated identifiers is spread in the network and stored redundantly in a plurality of network devices. This makes the identifier allocation mechanism of the present invention fail-safe and robust against temporary network partitioning. Since information on already allocated identifiers is stored in many places in the network, it may be accessed easier and faster so that the identifier allocation is more efficient. Furthermore, a candidate identifier generated for a requesting node may be checked by a plurality of other network nodes for being unique.

The identifier allocation method may comprise a step of generating a candidate identifier which is different from the identifiers locally stored in a node. This may be performed by randomly generating a candidate identifier and checking the local part of the distributed database to determine whether the generated candidate identifier is stored therein and, thus, already allocated. This step may be repeated until a candidate identifier is found which is new with regard to the information locally stored in the node. However, other more efficient methods for generating a unique and individual identifier within a given range of possible values may be employed. For example, a temporary address may consist of a network prefix concatenated to a host number. The generation of the candidate identifier may be performed by the new node which requests a unique identifier or by some other node which acts as a proxy for this node.

Preferably, a query message for the candidate identifier is sent to other network nodes in the communication network. This may be performed by using available broadcast or multicast mechanisms of the communication network. The query message may indicate the candidate identifier and instruct a receiving node to check with its local database in order to determine whether the candidate identifier is already allocated to some node in the network.

A network node which receives the query message may determine whether the candidate identifier received with the query message corresponds to a locally stored identifier. In the affirmative, it is known that the candidate identifier has already been allocated and the receiving network node may return an identifier taken message for indicating the allocation of the candidate identifier to a network node. All nodes which receive the query message (e.g. transmitted by broadcast or multicast) participate in checking whether the candidate identifier is unique in the network. Thus, the task of checking the uniqueness of the candidate identifier in a large network with a huge number of nodes, is distributed to a plurality of network nodes. Since the nodes in the network each store a plurality of already allocated identifiers, it is more robust than the prior art for configuration of ad-hoc networks, where each node stores only its own network address and the AREQ message must be distributed in the network until the corresponding node having the candidate identifier assigned as its own address is reached. Due to the distributed and redundant database for allocated addresses used in the present invention, it is not necessary that the query message reaches exactly the node having the candidate identifier allocated. Any other node which has the information on the allocated identifier may return an identifier taken message. Thus, the identifier allocation according to the present invention is more efficient and robust.

Preferably, the candidate identifier is allocated to the requesting node, if no identifier taken message for the candidate identifier is received within a predetermined time period. After the predetermined time period elapses, it is assumed that no more identifier taken message will arrive and the candidate identifier is unique and individual. It is preferred to set the time period such that a given range of the communication network may be covered by the query message. The time period may be set in accordance with the size of the communication network, e.g. based on the number of nodes and the time that the query message needs to traverse a certain part of the network.

The allocated identifiers are preferably stored in the network in a distributed database which is accessed using a distributed lookup service. Every kind of distributed database and lookup service is suitable to store the allocated identifiers and to resolve the query inquiring on the uniqueness of the candidate identifier. A typical mechanism of this kind is a peer-to-peer distributed infrastructure, such as DHT (Distributed Hash Table) based mechanisms, for example Chord, CAN (Content-Addressable Network), and Kelips. These peer-to-peer mechanisms do not require the query to be distributed in the network but allow, based on some distributed database maintenance protocol, the query to be directly addressed to the node containing the answer. Furthermore, the peer-to-peer distributed search service provided in Passive Distributed Indexing (PDI) may be used to store the information on allocated identifiers and resolve the query for the uniqueness of the candidate identifier.

A new candidate identifier is preferably generated when it turns out that the previous candidate identifier is not unique. In this case, the previous candidate identifier may be discarded and a new candidate identifier may be randomly generated, whereby the local database must be checked to ensure that the new candidate identifier is not stored therein as an already allocated identifier. It is also possible to generate a new candidate identifier based on an algorithm which ensures its uniqueness with regard to the local database. When receiving an identifier taken message for a candidate identifier, the node is informed that the candidate identifier is stored in some part of the distributed database as already allocated so that it becomes clear that the candidate identifier is not unique.

In order to further support node mobility, a reverse lookup for an identifier already allocated to the requesting node may be performed. This allows to check whether an identifier has already been allocated to the requesting node and to generate a candidate identifier only in the case that no identifier has previously been allocated.

Preferably, a reverse lookup query message including a name or interface ID of the requesting node is distributed in the network for asking other nodes to check if an identifier is already allocated to the identified network node. Network nodes which receive the reverse lookup query message check with their locally stored identifiers, e.g. in their local database, for an identifier allocation to the received name or interface ID. If an identifier allocation to the received name is retrieved, a reverse lookup answer message is returned in order to inform the enquiring node on that fact. Thus, the node which is in charge of allocating a unique identifier to the requesting node does not need to generate a new candidate identifier and to perform the above-explained candidate verification procedure. Instead, the already allocated identifier may be communicated to the requesting node and the address auto-configuration terminated.

According to a preferred embodiment, a query message and/or a reverse lookup query message is forwarded by a receiving node to one or more other network nodes in the network. This message forwarding may be performed by unicast, broadcast or multicast, depending on the type of employed communication network. It allows to distribute the query message or reverse lookup query message in a larger area of the network. Message forwarding is useful in ad-hoc networks in order to distribute the messages over multiple hops. By forwarding a query message for a candidate identifier, the global uniqueness of the candidate identifier in the network may be ensured. It may however be advantageous to restrict the message forwarding to a certain area of the network by using respective limitation mechanisms, such as hop-counts or TTL (time-to-live) for the messages. Preferably, a receiving node decides to forward a query message or a reverse lookup query message based on a network distance, such as a hop-count of the message, that the received message has travelled through the network starting from the node which has initially generated the message.

In order to steer response messages, such as identifier taken messages or reverse lookup response messages, to the node which has initiated the corresponding query message, it is preferred that a network node, which receives a response message and which has previously forwarded the corresponding query message, forwards the received response message towards the node from which it has previously received the corresponding query message. Thus, the response message is directed along the path of the corresponding query message in the network (reverse message backtracking). Nodes which have not previously received a corresponding query message may discard a received response message in order to prevent an unnecessary message transmission in parts of the network which do not lead towards the originating node of the corresponding query message.

For dissemination of information on allocated identifiers, it is useful that a network node, which receives an identifier taken message and/or a reverse lookup response message, stores the received information in its local database. Thus, information on allocated identifiers, such as the identifier and the corresponding name or network interface ID of the node, is stored in many different nodes. This supports the maintenance of a distributed database for allocated identifiers and further enhances the robustness and efficiency of the proposed identifier allocation method. If information on allocated identifiers is stored in a plurality of nodes, it may be retrieved faster (because the storing node is closer to the node which requests the information) and more robust (because, if one storing node fails or is disconnected, other nodes may still supply the requested information).

In order to maintain database consistency and to allow the reallocation of identifiers, which have been allocated to inactive or disappeared network nodes, the stored information on allocated identifiers may be deleted after a predetermined information expiration time expires. Thus, outdated information is removed from the distributed database. In order to confirm that a node is still active and uses the allocated identifier, respective identifier update messages may be transmitted and the respective information expiration times in the distributed database are updated.

A node which needs the allocation of an identifier may perform the above-explained identifier allocation process itself, or may select a proxy node which already has a valid unique identifier allocated and may participate in the communication process of the network without any restriction. The proxy node then determines a unique and individual identifier for the requesting node by generating a candidate identifier and verifying its uniqueness before returning the candidate identifier to the requesting node as permanent identifier. Any node in the neighbourhood of the requesting node may decide to act as a proxy node.

For establishing a preliminary communication with the proxy node, the requesting node preferably determines a temporary identifier which is not allocated to any network node in the neighbourhood of the requesting node. Thus, a local communication between requesting node and proxy node is possible, however, since the global uniqueness of the temporary identifier is not verified, the respective messages may not be routed in order to make sure that the communication of no other node using the same identifier is interfered with. The temporary identifier may be determined by the requesting node by listening to network traffic in the one-hop neighbourhood of the node and learning the identifiers of the immediate neighbours. It is also possible to send a temporary identifier query message to all neighbouring nodes for enquiring these nodes to check with their own identifiers in order to verify that the temporary identifier is locally unique.

Thus, for the case where the direct link layer connection between the requesting node and the proxy node is interrupted before the requesting node receives information on an identifier allocated to the node, a second identifier allocation request may take place. This may happen when a new node instructs a proxy node with the identifier allocation and either the new node or the proxy node moves so that the allocated identifier may not be transmitted to the requesting new node due to the limited communication allowed by the temporary identifier used by the requesting node.

In order to detect network nodes which may act as a proxy node for a requesting node, the requesting node may broadcast a proxy request message within a one-hop distance in the network. Any node which already has a unique identifier allocated and which is able to communicate with other nodes may return a respective proxy offer message to the requesting node. The requesting node may select one of the proxy offers and confirm the proxy selection by sending a proxy accept message to the respective node, which will then act as a proxy for the requesting node. Thus, a proxy relation between the requesting node and the selected proxy node is established and the above process for determining the uniqueness of an identifier is performed by the proxy node which may finally transmit the determined unique identifier via the communication network to the requesting node.

Upon reception of the allocated unique identifier, the requesting node may use this unique identifier as a network address, e.g. IP address, and configure its network interface based on the allocated network address in order to fully participate in network communication. Accordingly, the present invention provides an address auto-configuration method for network nodes in a communication network, which allows a robust and efficient assignment of network addresses to network devices. It may however be also used for assigning other unique identifiers to network nodes in a communication network. The address auto-configuration of the present invention is particularly suitable for dynamic networks with node mobility, such as ad-hoc networks, in particular MANETs (mobile ad-hoc networks) as defined by the IETF MANET working group.

The present invention provides a new method for allocating such unique addresses for nodes joining the ad-hoc network. The method relies on a distributed database and lookup service, such as a Peer-to-Peer (P2P) distributed infrastructure for the soft-state storage and retrieval of already allocated addresses. Compared to existing methods, the present invention has the advantages of being more scalable and more robust to network instabilities and network partitioning, while presenting a solution that maps very well to the characteristics of ad-hoc networks. It is also able to handle node mobility during the address selection phase, while prior art is weak in this point.

With the help of a distributed database and lookup service, it is possible to store information about the already allocated addresses in several nodes, as opposed to traditional solutions that store this information only in the nodes that use the address. This redundancy makes the method more robust: When a piece of information is distributed over several nodes instead of being concentrated in a single node, the likelihood for a query related to such information to succeed is increased, and therefore fault tolerance is improved. For instance, when a node is temporarily unreachable (e.g. because it is behind an obstacle) another node might be able to answer a query for the node's address, saying that the address is already in use, therefore the address will not be assigned to another node.

Scalability can be achieved by reduction of broadcast messages, e.g. by a scalable and efficient P2P method. An example of such method is presented in Patent Application EP 04 291 137.0 entitled "Method and apparatus for disseminating, storing and collecting information in a communication network" of the assignees of this application. The content of this Patent Application is herewith included by reference.

The invention is able to handle mobility of both, the new node and of the proxy used to select a new address for it. This is achieved by taking advantage of information stored in the distributed database and lookup service in a decentralized way, enabling the new node to receive an address even when it is away from its initial proxy.

The present invention also relates to a node in a communication network, comprising storage means for storing a plurality of unique identifiers allocated to other nodes in the network, candidate identifier generating means for generating a candidate identifier for a node which requests the allocation of a unique identifier, and communication means for communicating with other network nodes. Since multiple nodes in the network each store a plurality of already allocated identifiers, the information about allocated identifiers is distributed over multiple nodes. The communication means may be configured to distribute a generated candidate identifier to other nodes in the network in order to enquire the other nodes to check whether the candidate identifier is unique. Thus, a distributed database and lookup service is used for storing and retrieving information on already allocated identifiers. The verification of a candidate identifier is performed using the distributed database and lookup service so that an efficient and robust identifier allocation is achieved.

Preferably, the candidate identifier generating means generate a candidate identifier which is different from the identifiers stored locally in the storage means of the node. Thus, a locally unique identifier is generated and used for verification with the distributed database and lookup service.

The communication means may comprise query message sending means for sending a query message including the candidate identifier to other network nodes in the communication network. The communication means may also comprise query message receiving means for receiving query messages from other nodes via the communication network. Furthermore, query resolving means for determining whether an identifier received with the query message corresponds to an identifier locally stored in the storage means may be provided. Thus, the distributed lookup service for candidate identifiers may be implemented using query messages transmitted via the communication network.

The communication means may further comprise identifier taken message sending means for sending an identifier taken message to the node which has enquired about the uniqueness of a candidate identifier, and identifier taken message receiving means for receiving an identifier taken message. An identifier taken message is generated and sent, if the receiving node determines that, via its query resolving means, the candidate identifier indicated in a received query message, is already allocated to a network node. Upon receiving an identifier taken message, the identifier taken message receiving means of the enquiring node may instruct the candidate identifier generating means to generate a new candidate for the requesting node.

According to a preferred embodiment of the invention, the communication means comprise reverse lookup query message sending means for sending a reverse lookup query message, reverse lookup query message receiving means for receiving a reverse lookup query message, reverse lookup response message sending means for sending a reverse lookup response message and/or reverse lookup response message receiving means for receiving a reverse lookup response message. Reverse lookup means may be provided for determining whether a node name or network interface ID received with a reverse lookup query message is stored in the local storage means and has an allocated identifier. If the reverse lookup means determine that an identifier is already allocated to the received name, it may instruct the reverse lookup response message sending means to send a reverse lookup response message in order to inform the enquiring node on the already allocated identifier for the named network node. Thus, a reverse lookup mechanism for avoiding duplicate identifier allocation may be implemented based on reverse lookup messages.

The communication means are preferably configured to forward the received message to other nodes in the communication network. This allows to distribute messages over multiple segments or hops of the network and makes the present invention particular suitable for segmented networks or ad-hoc networks. Accordingly, the communication means may be adapted to communicate via an ad-hoc network, in particular a MANET.

According to a preferred embodiment of the invention, the storage means may be configured as caching means for temporarily storing information received with messages, in particular for storing allocated identifiers and the relation of allocated identifiers to network nodes. In order to remove outdated information, the storage means may be configured to delete stored information after a predetermined information expiration times expires. The information expiration time may be set when receiving a message providing information on an allocated identifier. Preferably, the received information is marked valid for a given time interval starting from the message reception.

Furthermore, proxy node selection means may be provided for selecting a proxy node for the requesting node. The communication means may be adapted to determine a temporary identifier for communicating (via a one-hop network link) with the proxy node. The communication means are preferably configured to broadcast a proxy request message and to receive a proxy offer message from potential proxy nodes which offer to determine a unique identifier on behalf of the requesting node. The proxy node selection may be based on received proxy offer messages from potential proxy nodes and a particular proxy selection algorithm, e.g. by selecting the first responding proxy.

For address auto-configuration purposes, it is preferred that the node comprises configuring means for automatically configuring a network interface and routing means based on the unique identifier allocated to the node, which may be a network address of the communication network.

According to the present invention, an address auto-configuration process is provided which is particularly suitable for dynamic network structures, node mobility and temporary network partitioning and merging. Thus, the present invention applies preferably to ad-hoc networks. The address configuration is stateless and does not require any dedicated address configuration server. It is based on a distributed database and lookup service, e.g. provided by a peer-to-peer distributed infrastructure. Due to the distributed nature of the information storage, the address configuration mechanism of the present invention is efficient and robust.

These and other potential objects, features and advantages of the present invention will appear more fully from the following detailed description of preferred embodiments of the invention. It is to be understood, however, that the scope of the present invention is not limited to the given embodiments shown in the accompanying drawings, wherein
- Fig. 1: shows a schematic block diagram of a network node according to an embodiment of the present invention;
- Fig. 2: illustrates schematically the proxy selection process of a preferred embodiment of the invention;
- Fig. 3: depicts schematically the reverse lookup process according to a preferred embodiment of the invention;
- Fig. 4: illustrates schematically the address selection process according to a preferred embodiment of the invention;
- Fig. 5: illustrates schematically the node mobility adaptation provided by the present invention;
- Figs. 6 and 7: show schematically the address auto-configuration algorithm for a new node according to a preferred embodiment of the invention;
- Fig. 8: illustrates schematically the process for the treatment of Proxy Requests; and
- Figs. 9 and 10: illustrate schematically the process for the treatment of Proxy Accept Messages.

The goal of the present invention is to provide a new solution to the address auto-configuration problem in ad-hoc networks. The proposed solution is based on the usage of a distributed database and lookup service as a distributed soft-state database of <address, interfaceID> pairs, where address is the address assigned to the network interface identified by interface ID in a given node in the ad-hoc network. Alternatively, network names for network nodes may also be associated with an allocated address and stored in the distributed database.

While the present invention is explained in the following for ad-hoc networks, it is not restricted to this network type and may be also applied to other types of communication network. Furthermore, the following illustration of a preferred embodiment is based on a peer-to-peer distributed infrastructure. However, other distributed database and lookup services may also be deployed for storing information on allocated identifiers (addresses) in a plurality of network nodes.

A preferred embodiment of the invention comprises three parts:
Proxy election: The new node selects a proxy node that is already a member of the P2P network. The proxy node is selected among the directly reachable neighbours of the new node. In this respect, two nodes A and B are neighbours if they are topologically close to each other in the ad-hoc network. Node A is a one-hop neighbour of node B if A has direct connectivity with B, i.e. the route path from A to B does not use any other intermediate node. On the other hand, node A is a two-hop neighbour of node B if A is connected to B via a single intermediate node C. The proxy is in charge of finding an address that can be assigned to the new node. This is called address selection. In order to be able to select a proxy node, the new node uses a temporary address that is used to communicate with its immediate neighbourhood.

Address selection: The proxy node performs address selection by locally generating a candidate IP address, which is an address that is not in its current P2P address cache. The proxy node may find a suitable address for the new node as follows: First of all it tries to assign the same previous address that the new node might have used beforehand. If such address is not available, it generates a candidate IP address, which is an address that is not in its current P2P address cache. It then queries the P2P network in order to check whether the candidate address is already allocated or not. If allocated, the query will return the interface ID for the address. Otherwise, no answer will be returned. After a few attempts to find an answer to a query, if no answer is found, the proxy node assumes the candidate address is free for use and sends it to the new node. In case of mobility of the proxy or of the new node - leading away from each other's range, a mobility adaptation mechanism (which uses a Reverse Lookup facility) is provided to ensure that a consistent address can still be assigned to the new node.

Address configuration: Upon reception of an address from the proxy node, the new node assigns the address to itself, starts the routing services, and joins the P2P network. It may now act as a proxy for other new nodes.

This invention does not dictate which P2P method should be used. However, it would benefit from the method described in Patent Application EP 04 291 137.0, entitled "Method and apparatus for disseminating, storing and collecting information in a communication network". This Patent Application provides a P2P method with reduced number of broadcast messages, which makes it more scalable than other comparable methods. A reduction of broadcast messages is achieved by one or more of the following three mechanisms which may be applied individually or combined:
Usage of a Multi-Point Relay (MPR) protocol and algorithm: when a node M receives a query from neighbour node N, node M is only allowed to propagate the query to other nodes if node M is a selected MPR relay node of node N.
Lazy query propagation: i.e. delay/listen before broadcast relaying - a node that receives a query starts a timer and listens to the responses of others: if a response for the queried item is heard, the node does not propagate the query further.
Quench wave generation: after the querying node receives a response, a decision algorithm determines whether it should start a quench wave.

The quench wave propagates as quickly as possible and seeks to stop on-going query broadcasts.

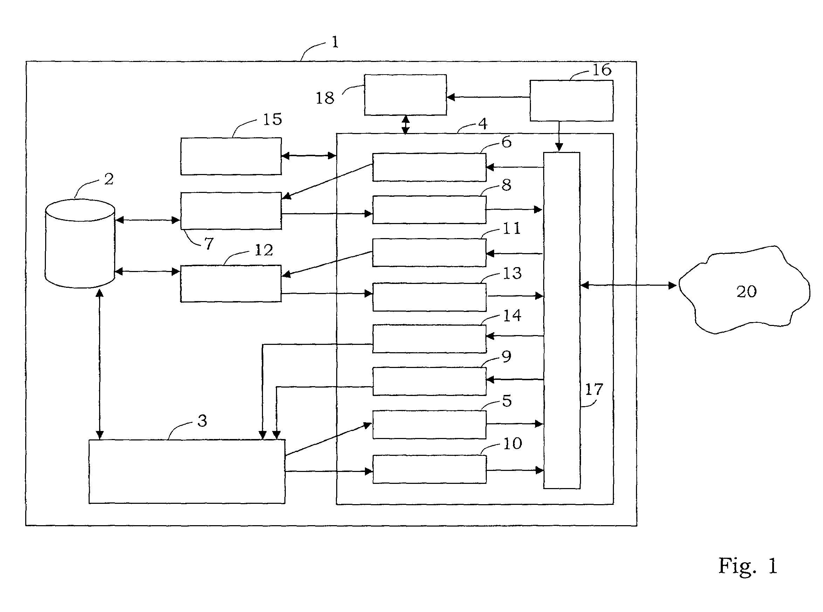

Fig. 1 shows a schematic block diagram of a network node 1 according to an embodiment of the present invention. The network node 1 is part of a communication network 20, in particular an ad-hoc mobile network, and communicates to other network nodes in this communication network 20 via communication means 4. Storage means 2 are provided for storing a plurality of unique identifiers, in particular network addresses, allocated to nodes in the network 20. Candidate identifier generating means 3 generate a candidate identifier for a new node which requests the allocation of a unique identifier. The requesting node may be the network node 1 itself or another network node which has chosen the node 1 as its proxy. The candidate identifier generated by the candidate identifier generating means 3 is different from all the identifiers stored in the storage means 2, thus, it is locally unique.

Query message sending means 5 send a query message including the generated candidate identifier to other network nodes in the communication network 20. The sent query messages are received by query message receiving means 6 of other nodes, and query resolving means 7 of these nodes determine whether an identifier received with a query message corresponds to an identifier stored in the local storage means 2 of the node.

If the candidate identifier is already allocated to a network node, i.e. it is stored in the storage means 2, an identifier taken message is sent by identifier taken message sending means 8. The identifier taken message is received by the identifier taken message receiving means 9 of the node which has enquired about the uniqueness of the candidate identifier. When receiving an identifier taken message, the enquiring node knows that the candidate identifier is already allocated to another node and thus not unique, and the candidate identifier generating means 3 are instructed to generate a new candidate identifier.

In order to support node mobility, it is preferred that a reverse lookup query message including a name or network interface ID of the requesting node is sent by reverse lookup query message sending means 10 before a candidate identifier is generated by the candidate identifier generating means 3. Other nodes receive the reverse lookup query message with their respective reverse lookup query message receiving means 11, and a reverse lookup means 12 determines if the network name or interface ID received with the reverse lookup query message is stored in the storage means 2 and already has an allocated identifier. In this case, a reverse lookup response message is sent by reverse lookup response message sending means 13 to the enquiring node, which receives the reverse lookup response message via its reverse lookup response message receiving means 14. When receiving a reverse lookup response message including the already allocated identifier of the requesting node, the enquiring node may pass the received identifier to the requesting node for confirming the previous identifier allocation.

Proxy node selection means 15 are provided for selecting a proxy node, which determines a unique identifier for the requesting node. The proxy node selection means 15 interact with the communication means 4 in order to broadcast a proxy request message and to receive proxy offer messages from potential proxy nodes, which offer their respective services.

Configuration means 16 configure a network interface 17 and routing means 18 based on the allocated unique identifier, which may be a network address allocated to the communication network 20.

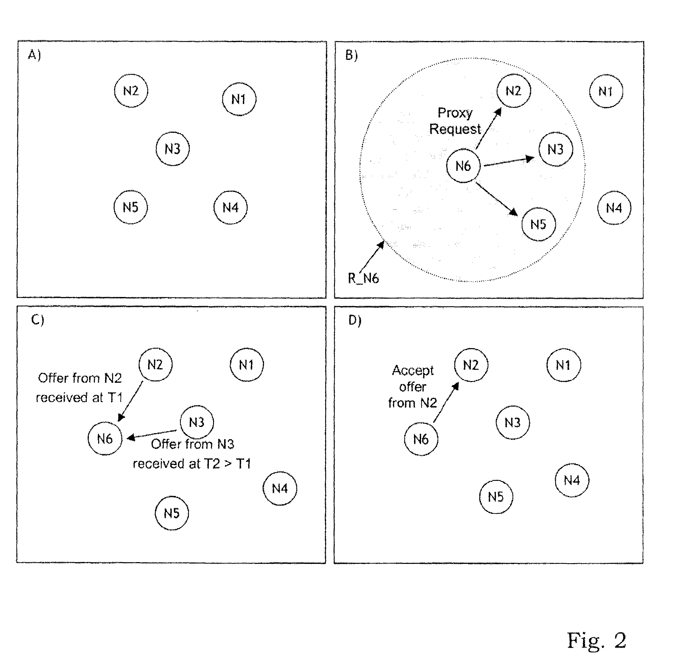

The proxy selection process of a preferred embodiment of the invention is illustrated with reference to Fig. 2. A new node joining the ad-hoc network first selects a proxy in the P2P network. Initially, the node has no network address, so it is unable to generate a packet with a valid source address. Protocols such as DHCP use a null source address ('0.0.0.0' in IPv4). However, this is difficult to implement and error prone. The easiest way is for the new node to assign a temporary address to itself. A temporary address consists of a network prefix concatenated to a host number. The network prefix is common to all nodes participating in the network, or in the case of hierarchical addressing it is common to all nodes belonging to the same zone in the ad-hoc network.

In order to form a temporary address, the first step is to obtain the correct network prefix, together with its corresponding prefix length in bits. The network prefix could be assumed as pre-configured or taken from a pre-defined or standardized address range. Another way is for the new node to listen to prefix advertisements from the network. This method is used in IPv6 stateless auto-configuration, but has to be adapted to ad-hoc networks since in the latter any node may be considered as a router.

The second step is to generate a host number. This can be done by using a pseudo-random number generator, or a previously available identifier that can be guaranteed to be unique over the scope of the temporary address. The temporary address is then formed by concatenating the network prefix with the host number.

The temporary address must be unique within the immediate neighbourhood of the new node. If for the host number chosen address uniqueness cannot be guaranteed, Duplicate Address Detection (DAD) has to be performed within the reachable range of the new node. When a temporary address has been successfully assigned, it can be used for communication between the new node and its direct (one-hop) neighbours.

Using its temporary address, a new node can apply for a permanent address. The permanent address is also formed by a network prefix and a host number, but the scope of the permanent address is much larger than the temporary one, comprising at least the whole ad-hoc network. The new node alone is not responsible for ensuring the uniqueness of the permanent address. This responsibility is shared with other nodes in the ad-hoc network. This is done via a peer-to-peer distributed soft-state storage that maintains information about the allocated addresses. Since the new node is not yet part of the peer-to-peer network, it can rely on a proxy node already in the peer-to-peer network, which is able to enquire the P2P distributed storage to check whether a candidate address is already in use or not. The new node chooses its proxy from a set of offers coming from its immediate neighbours. Several criteria for choosing the proxy are possible. A simple one is to pick up the first offer received. This will ensure quick reaction time and the choice of a proxy which is close enough and not overloaded.

Fig. 2 shows the process for the proxy selection procedure in more detail. First of all, in Fig. 2A there is depicted an ad-hoc network of five nodes (N1, N2, N3, N4, and N5). Node N6 would like to join the network (Fig. 2B). It allocates a temporary address (not shown) and uses this address as a source address to broadcast a proxy request message to its immediate neighbours. The nodes within its (radio) coverage area (zone R_N6 indicated in Fig. 2B) will receive a copy of the broadcast proxy request. Thus, nodes N2, N3 and N5 receive the message. Node N5 decides not to make an offer to N6 (for instance, because N5 is overloaded with other tasks). Nodes N2 and N3 make an offer (Fig. 2C). N6 receives the offer from N2 before the offer from N3. The proxy selection criterion for N6 is to choose the first offer. Therefore, N6 accepts the offer from N2. It sends an accept message to N2 to indicate the acceptance. Node N2 is now responsible for obtaining a valid address which N6 can use as its permanent address.

Examples for preferred message formats are:
Proxy Request: <RequestInterfaceID>;
Proxy Offer: <ProxyInterfaceID, RequestInterfaceID>;
Proxy Accept: <RequestInterfaceID>,
where:
RequestInterfaceID is a unique identifier for the new node's network interface card for which the new address is being requested. ProxylnterfaceID is a unique identifier of the proxy node's network interface card which the proxy will use to communicate with the new node.

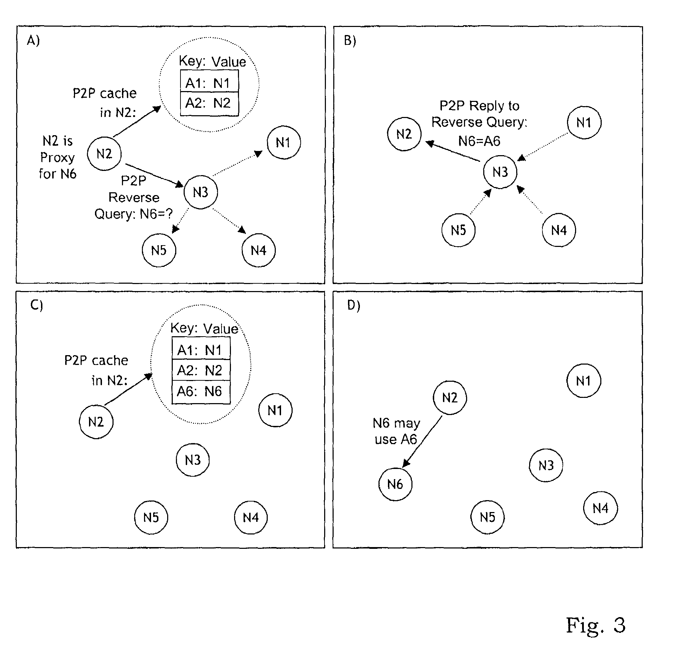

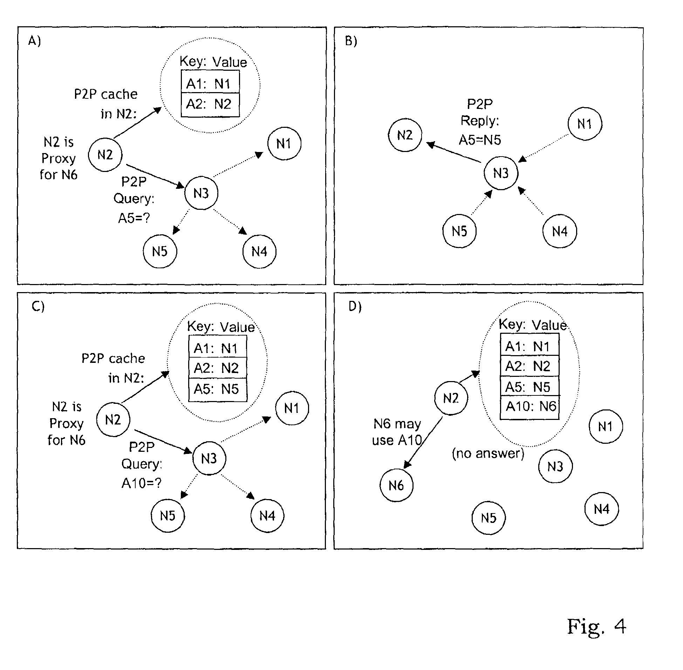

Figs. 3 and 4 depict the address selection process according to an embodiment of the present invention. When a node temporarily disconnects from the network and attempts to reconnect again, it is a good policy to assign the same address it had before, whenever possible. This also helps with mobility adaptation. First of all, the proxy node performs what is called a reverse lookup in the P2P system to check whether the new node already has an assigned address. If no address for the new node is found, the proxy node generates a new candidate address and consults the P2P network to ensure its uniqueness.

The candidate address is an address that is not currently known to the proxy. Among the list of addresses that are currently known to the proxy, there are: its own addresses, the host addresses present in its local routing table, its ARP cache, and its P2P address cache. The proxy then queries the P2P network in order to check whether the candidate address is already allocated or not. If allocated, the query will return the interfaceID for the address. Otherwise, no answer will be returned. After a few attempts to find an answer to a query, if no answer is found, the proxy node assumes the candidate address is free for use and sends it to the new node.

Fig. 3 depicts the reverse lookup process. In Fig. 3A, node N2 is proxy for N6 (the example of Fig. 2 is continued). Proxy node N2 issues a reverse query to the P2P system asking which is the address of node N6. The reply comes that N6 has address A6, as shown in Fig. 3B. N2 adds the entry <A6,N6> to its local P2P cache (Fig. 3C) and sends a reply to N6 saying that it may use address A6 (Fig. 3D). If there is no answer to the reverse lookup query after a timeout, the proxy node decides to allocate a new address for the new node.

Fig. 4 illustrates the new address selection process. Node N6 is the new node which has chosen N2 as its proxy. N2 selects a candidate address that is not locally known to N2, for instance, A5. It then issues a query to the P2P network for the value of A5 (Fig. 4A). According to the information stored in the P2P network, address A5 is already assigned to node N5. Therefore A2 receives a response to its query saying that key A5 has value N5 (Fig. 4B). The dotted arrows in Fig. 4 mean that the query and response messages may or may not navigate through the path indicated by the arrows. The exact amount and path of messages depends on the P2P mechanism used. Numerous different mechanisms are possible. Since address A5 is already in use, N2 selects a new candidate address (A 10 in Fig. 4C) and queries the P2P again. This time no answer is returned within a waiting period. Therefore N2 decides that the address A10 is free, and can be safely assigned to N6. It then inserts the entry <A10,N6> in its local cache and sends a reply message to N6 saying that it may use address A10.

An example for a preferred Address Reply message format is:
<NewNodeInterfaceID, NewAddress>,
where NewNodeInterfaceID is the RequestInterfaceID issued by the new node and explained above, and NewAddress is the new address allocated to the new node.

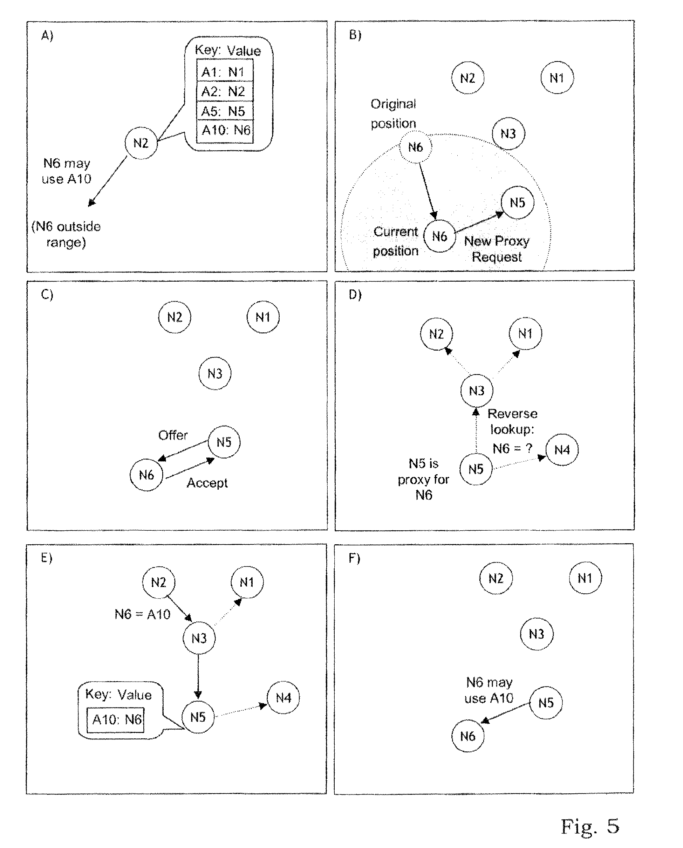

Fig. 5 illustrates the node mobility adaptation provided by the present invention. The address selection process relies on absence of feedback to decide whether the address is free for use. This takes some waiting time before a decision can be made. During this period, the proxy and/or the new node might move in such a way that they are no longer neighbours in the network (i.e. no direct one-hop connection between these nodes exists). If this happens, the proxy will not be able to deliver the new address to the new node, since the communication between new node and proxy is based on a locally unique temporary address for the new node which may not be routed. In order to cope with this situation, the present invention proposes to use the P2P network such that another proxy can deliver the new address to the new node in case the initial proxy is no longer within direct radio range. The process is depicted in Fig. 5, which is a continuation of the scenario shown in Fig. 4.

In Fig. 5A, node N2 is a proxy for N6 and has allocated address A10 for N6. It sends an Address Reply message to N6 saying that it may use address A10. However N6 has moved to another location, thus does not receive the message. Nevertheless, the address allocated to N6 stays in N2's P2P cache.

After a timeout period without receiving the requested new address, N6 issues a new proxy request message (Fig. 5B). This time N5 is in the neighbourhood and sends a proxy offer to N6 (Fig. 5C). N6 accepts the offer from N5, and N5 then becomes a new proxy for N6 (Fig. 5D). It then starts the reverse lookup for N6. Since N2 is in the P2P network and has an entry <A10,N6> in its cache, this information propagates within the P2P network as an answer to the query and reaches the inquiring node N5 (Fig. 5E). N5 then adds the entry <A10,N6> to its local cache, and sends a reply message to N6 saying that it may use address A10 (Fig. 5F).

Note that the scheme would work in the same way had the initial proxy N2 moved to another location, or even when both N2 and N6 move away from each other. It works independently on the mobility pattern, provided that there is always at least one member of the P2P network that can serve as a proxy for the new node, and that at least one copy of the initial address assignment information is present and can be found in the P2P network via reverse lookup. This is leads to a decentralized process for allocation and maintenance of address assignment information, which is robust to node mobility and network partitioning/merging. In case of partitioning, a new node may continue using its address and recover full connectivity when the partitions heal, because copies of the assignment information remain in the P2P system.

The present invention does not dictate the method to implement the reverse lookup. A simple but inefficient way is sequential lookup of the P2P cache. Another way is to maintain two tables, one in which the key is the address, and the value is the node identifier, and another one with the opposite: the key is the identifier and the value is the address. This leads to redundant information but enables more efficient lookup since hashing techniques can be applied to the key.

Upon reception of an address from the proxy node, the new node assigns the address to itself, starts the routing services, and any other necessary services (e.g. network management, etc.). It then joins the P2P network. It may now act as a proxy for other new nodes.

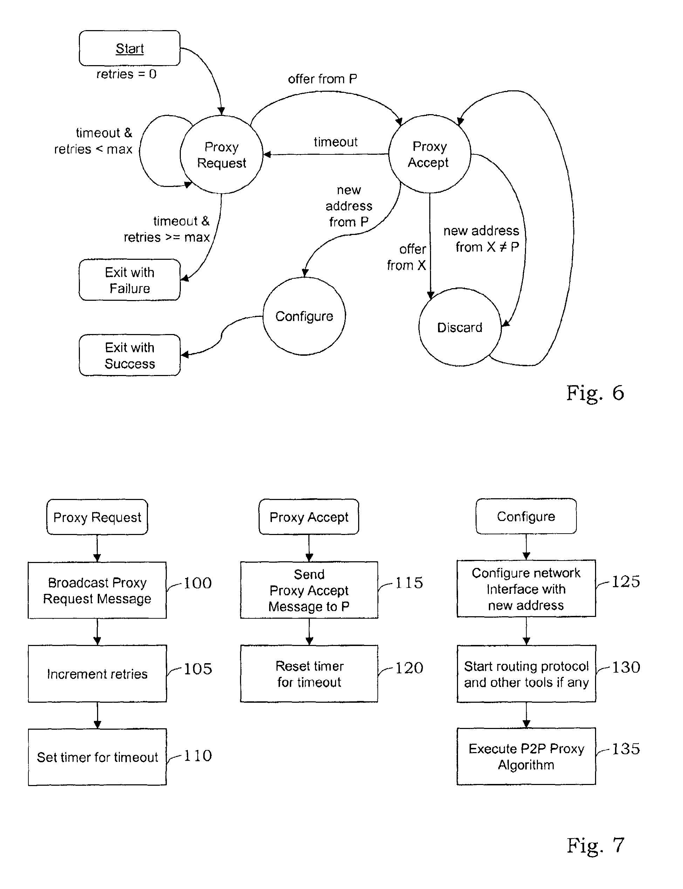

Fig. 6 shows the state transition diagram of the address auto-configuration algorithm for a new node that seeks to join the ad-hoc network. Each state executes the corresponding algorithm depicted in Fig. 7.

The Proxy Selection Phase is illustrated first. The new node starts with a Proxy Request: it broadcasts a Proxy Request Message to its immediate neighbourhood (step 100), increments the number of retries (step 105) and sets a timer (step 110). If this timer expires (timeout event) and the number of retries has exceeded a maximum limit ('max' value), then the node gives up and exits with a failure status. If the timeout expires but the number of retries is still below the maximum, then the node tries again by sending another Proxy Request Message. When the first Proxy Offer Message is received (let P be the node where this message came from) the node transitions to the Proxy Accept State where it issues a Proxy Accept Message to P (step 115).

The Address Selection Phase is actively performed by the proxy node. The new node has to wait for the new address to arrive. For this it resets the timer for the timeout (step 120) and waits for new incoming messages. Other proxy offers and Address Reply Messages from nodes other than P are discarded. The discard algorithm is not shown in Fig. 7 since it consists simply in silently erasing the received message. If the timeout expires before an answer from P is received, the node transitions back to the Proxy Request State where it may retry to generate new proxy requests (if the number of retries has not reached the limit).

When the node receives the Address Reply Message from P, it goes to state "Configure". This corresponds to the Address Configuration Phase, during which the new node configures its own network interface with the newly received address (step 125), starts in step 130 the appropriate ad-hoc routing protocols (unicast and optionally multicast) and other tools if any (e.g. network management tools). It then joins the P2P network by starting the P2P tool and executes the P2P Proxy Algorithm (step 135).

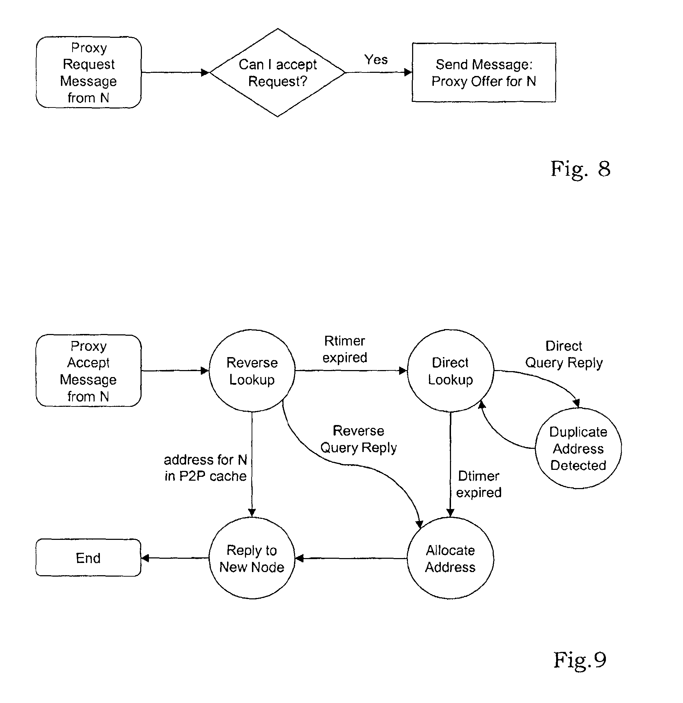

In the following, the address auto-configuration algorithm for a P2P node that is able to serve as a proxy for new nodes seeking to join the ad-hoc network is explained. The algorithm is divided into two parts:
First, the algorithm for the proxy node in reaction to the reception of Proxy Requests is illustrated in Fig. 8. This part of the algorithm belongs to the Proxy Selection Phase. The node deals with a Proxy Request Message by simply replying positively to it when the node has sufficient resources to serve as a proxy for a new node. A node may choose not to serve as a proxy for diverse reasons, for instance, due to lack of local resources: battery too low, processor too slow or overloaded, not enough memory, etc.

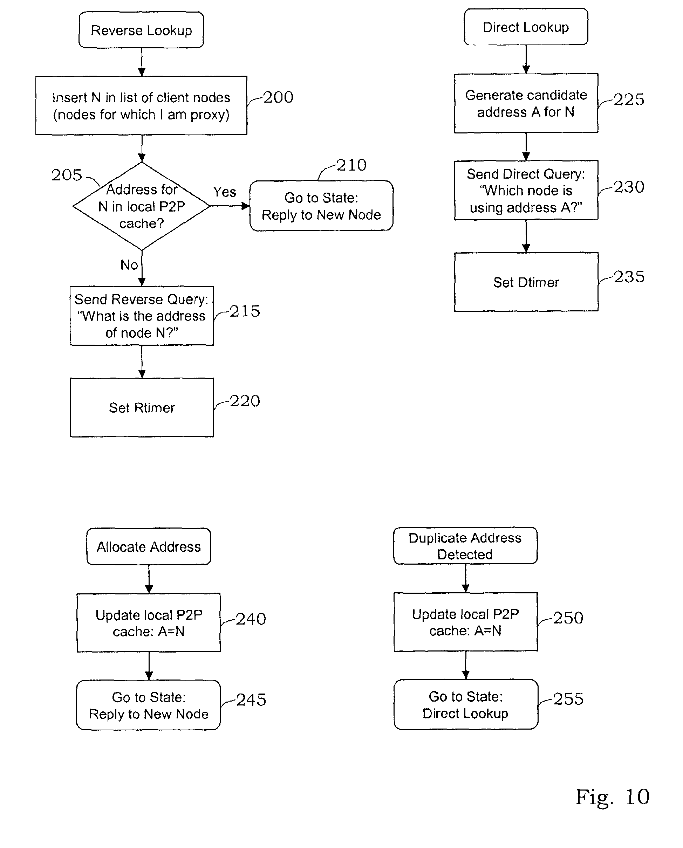

Next, the state transition diagram for the proxy node in reaction to the reception of Proxy Accept Messages is illustrated in Fig. 9. Upon reception of a Proxy Accept Message from new node N, the node enters the Address Selection Phase. It executes the algorithm represented by the state transition diagram in Fig. 9. The details of each state in Fig. 9 can be seen in Fig. 10, except for the state "Reply to New Node" which simply issues an Address Reply Message to node N.

The Address Selection Phase can be subdivided into a Reverse Lookup Phase and a Direct Lookup Phase.

Reverse Lookup Phase: Upon reception of a Proxy Accept Message from new node N (Reverse Lookup State in Fig. 9 and 10), the proxy node inserts the identifier for node N in its local list of clients (step 200) and checks in step 205 whether the address for N is already in its local cache: in case yes, the new node's request can be satisfied without any need of further messages to the network. The proxy then sends in step 210 an Address Reply Message to the new node ("Reply to New Node" state). If no address for N is found in the local cache, the node sends a Reverse Lookup Query to the P2P network asking for the address of node N (step 215). If an answer is received, the node goes to "Allocate Address" state where it inserts the received answer in its local P2P cache (step 240) and sends an Address Reply to the new node containing the allocated address (step 245). If no answer to this query is received after the 'Rtimer' expires (which is set in step 220), then the node transitions to the Direct Lookup State, which corresponds to the beginning of the Direct Lookup Phase.

Direct Lookup Phase: In this Phase the node generates in step 225 a candidate address A for node N, and issues a direct query to the P2P network in order to check whether another node is already using address A (step 230). If an answer to the query is received before 'Dtimer' expires (set in step 235), then a duplicate address has been found, and the node goes to "Duplicate Address Detected" state where it updates its local cache with the answer received (step 250), and goes back to the Direct Lookup State where it tries another candidate address (step 255). If no answer to the direct query is received and 'Dtimer' expires, then the candidate address is considered to be free for use. The node then moves to "Allocate Address" State (step 240) and from there to "Reply to New Node" with the allocated address (step 245).

The present invention can be used in any communication network, in particular ad-hoc networks, in order to auto-configure network addresses. Especially, the usefulness of this invention is seen in environments where manual configuration is difficult or impossible, e.g. due to absence of technically skilled personnel, due to highly dynamic conditions, or due to a huge amount of nodes.

For example, the invention would be particularly useful in vehicular ad-hoc networks in the context of Intelligent Transportation Systems (ITS). The drivers in the vehicles do no have the time nor the skills to perform manual configuration. The system should be able to auto-configure itself in a decentralized way, as it is proposed in this invention. Another motivation is the presence of numerous sensors in vehicles. Such sensors could form an ad-hoc sensor network, and together with sensors in other cars, road sensors, etc., would form a huge self-organizing monitoring infrastructure for vehicle diagnosis, road conditions, accident prevention and detection, and so on. It would be impossible even for a skilled network manager to configure thousands, or even millions of sensor devices, some of which might not even be directly accessible due to their small size or because their are embedded in a more complex structure. An auto-configuration mechanism is therefore essential in this case.

Other examples of useful scenarios for this invention are home networks and ubiquitous computing environments, in which users should be able to benefit from real plug-and-play networked devices. Mission critical applications such as emergency networks for rescue operations also obviously require auto-configured devices, since the rescue personnel is too busy with many urgent tasks and thus cannot afford to waste precious time on manual network configuration.

## Claims

1. Method for allocating a unique identifier to a network node in a communication network (20) comprising a plurality of network nodes, wherein multiple network nodes each store a plurality of identifiers already allocated to network nodes so that information about each allocated identifier is distributed over the multiple nodes, and wherein a candidate for an identifier for a requesting node is checked by other network nodes for being unique.

2. Method according to claim 1, comprising the steps of:
- generating a candidate identifier which is different from the identifiers locally stored in a node, and
- sending a query message for the candidate identifier to other network nodes,
wherein a network node which receives the query message for the candidate identifier determines whether the identifier received with the query message corresponds to a locally stored identifier, and, in the affirmative, returns an identifier taken message for indicating the allocation of the candidate identifier to a network node.

3. Method according to claim 1 or 2, wherein the candidate identifier is allocated to the requesting node if no identifier taken message for the candidate identifier is received within a predetermined time period.

4. Method according to at least one of the preceding claims, wherein allocated identifiers are stored in the network (20) in a distributed database which is accessed using a distributed lookup service.

5. Method according to at least one of the preceding claims, wherein allocated identifiers are stored redundantly by a plurality of nodes in the network (20) based on a peer-to-peer distributed infrastructure.

6. Method according to at least one of the preceding claims, wherein a new candidate identifier is generated when it turns out that the previous candidate identifier is not unique, in particular when receiving an identifier taken message for the previous candidate identifier.

7. Method according to at least one of the preceding claims, comprising the step of, prior to generating a candidate identifier, checking whether an identifier is already allocated to the requesting network node and generating a candidate identifier only in the negative.

8. Method according to claim 7, wherein a reverse lookup query message including a name of the requesting network node is distributed in the network, and receiving network nodes check with their locally stored identifiers for an identifier allocation to the received name.

9. Method according to at least one of the preceding claims, wherein a query message or a reverse lookup query message is forwarded by a receiving node to one or more other network nodes, in particular by unicast, broadcast or multicast.

10. Method according to claim 9, wherein a receiving node decides to forward a query message or a reverse lookup query message based on a network distance that the received message has travelled through the network (20) starting from the node which has initially generated the message, in particular based on a hop-count of the message.

11. Method according to at least one of the preceding claims, wherein a network node, which receives an identifier taken message or a response to a reverse lookup query message and which has previously forwarded the corresponding query message or reverse lookup query message, forwards the received message to the node from which it has previously received the corresponding query message.

12. Method according to at least one of the preceding claims, wherein a network node which receives an identifier taken message or a reverse lookup response message stores the received identifier.

13. Method according to at least one of the preceding claims, wherein the stored information on an allocated identifier is deleted after a predetermined information expiration time expires.

14. Method according to at least one of the preceding claims, wherein a node which needs an allocated identifier selects a proxy node which determines a unique identifier for the node by generating a candidate and verifying its uniqueness before returning the identifier to the requesting node.

15. Method according to claim 14, wherein the requesting node determines a temporary identifier for communicating with the proxy node, the temporary identifier being not allocated to a network node in the one-hop proximity of the requesting node.

16. Method according to claim 15, wherein the requesting node broadcasts a proxy request message within a one-hop distance in the network (20) for discovering a node which already has a unique identifier allocated and which is part of the distributed database and lookup service infrastructure and thus able to communicate with other nodes in this service infrastructure.

17. Method according to any of claims 14 to 16, wherein the proxy node transmits the determined unique identifier via the communication network (20) to the requesting node.

18. Method according to at least one of the preceding claims, wherein the unique identifier is a network address assigned to the requesting node.

19. Method according to claim 18, wherein, upon reception of the allocated network address, the requesting node configures a network interface based on the allocated network address.

20. Network node in a communication network (20) comprising a plurality of nodes, comprising:
- storage means (2) for storing a plurality of unique identifiers allocated to nodes in the network (20), wherein information about each allocated identifier is distributed over multiple network nodes;
- candidate identifier generating means (3) for generating a candidate identifier for a node which requests the allocation of a unique identifier; and
- communication means (4) for communicating, via the communication network (20), with other network nodes, the communication means (4) being configured to distribute the generated candidate identifier to other nodes in order to inquire the other nodes whether the candidate identifier is unique.

21. Network node according to claim 20, wherein the candidate identifier generating means (3) generate a candidate identifier which is different from the identifiers stored in the storage means (2).

22. Network node according to claim 20 or 21, wherein the cornmunication means (4) comprise:
- query message sending means (5) for sending a query message including the candidate identifier to other network nodes; and
- query message receiving means (6) for receiving query messages from other nodes,
the network node further comprising query resolving means (7) for determining whether an identifier received with a query message corresponds to an identifier stored in the storage means (2).

23. Network node according to at least one of claims 20 to 22, wherein the communication means (4) are adapted to communicate to other nodes using a distributed database and lookup service.

24. Network node according to at least one of claims 20 to 23, wherein the communication means (4) comprise:
- identifier taken message sending means (8) for sending an identifier taken message to the node which has inquired about the uniqueness of a candidate identifier, if the candidate identifier is already allocated to a network node; and
- identifier taken message receiving means (9) for receiving an identifier taken message and for instructing the candidate identifier generating means (3) to generate a new candidate.

25. Network node according to at least one of claims 20 to 24, further comprising reverse lookup means (12) for determining if a network node name received with a reverse lookup query message is stored in the storage means (2) and has an allocated identifier, wherein the communication means (4) comprise:
- reverse lookup query message sending means (10) for sending a reverse lookup query message including a unique name of the requesting node to other network nodes;
- reverse lookup query message receiving means (11) for receiving a reverse lookup query message;
- reverse lookup response message sending means (13) for sending a reverse lookup response message to the inquiring node, if the reverse lookup means (12) determine that an identifier is allocated to the received name; and
- reverse lookup response message receiving means (14) for receiving a reverse lookup response message.

26. Network node according to at least one of claims 20 to 25, wherein the communication means (4) are configured to forward a received query message, identifier taken message, reverse lookup query message, and/or reverse lookup response message.

27. Network node according to at least one of claims 20 to 26, wherein the storage means (2) are configured as caching means for temporary storing information received with an identifier taken message and/or a reverse lookup response message, the information being deleted after a predetermined information expiration time expires.

28. Network node according to at least one of claims 20 to 27, comprising proxy node selection means (15) for selecting a proxy node which determines a unique identifier for the requesting node.

29. Network node according to claim 28, wherein the communication means (4) are adapted to determine a temporary identifier for communicating with the proxy node, to broadcast a proxy request message, and to receive proxy offer messages from potential proxy nodes which offer to determine a unique identifier on behalf of the requesting node, and wherein the proxy node selection means (15) select a proxy node based on received proxy offer messages.

30. Network node according to at least one of claims 20 to 29, wherein the allocated unique identifier is a network address, the node comprising configuration means (16) for configuring a network interface (17) and routing means (18) based on the allocated network address.

31. Network node according to at least one of claims 20 to 30, wherein the communication means (4) are adapted to communicate via an ad-hoc network.

32. Computer program product directly loadable into the internal memory of a digital computer, comprising software code portions for performing the steps of at least one of claims 1 to 19 when said product is run on said computer.
